(19) Europäisches Patentamt

European Patent Office

Office européen des brevets

(11) Veröffentlichungsnummer: **0 255 745 B1**

(12) **EUROPÄISCHE PATENTSCHRIFT**

(45) Veröffentlichungstag der Patentschrift:
29.08.90

(51) Int. Cl.⁵: **C02F 3/28**, C02F 3/10

(21) Anmeldenummer: 87201457.6

(22) Anmeldetag: 30.07.87

(54) **Verfahren zum biologischen Behandeln von Abwasser aus einer Rauchgasentschwefelungsanlage.**

(30) Priorität: 06.08.86 DE 3626583

(43) Veröffentlichungstag der Anmeldung:
10.02.88 Patentblatt 88/6

(45) Bekanntmachung des Hinweises auf die Patenterteilung:
29.08.90 Patentblatt 90/35

(84) Benannte Vertragsstaaten:
AT DE ES FR GB IT

(56) Entgegenhaltungen:
DE-A- 2 531 598
DE-A- 2 748 313

CHEMICAL ABSTRACTS, Band 98, Nr. 4, 24.
Januar 1983, Seite 305, Zusammenfassung Nr. 21788b,
Columbus, Ohio, US; & JP-A-57 136 996 (KURITA
INDUSTRY CO., LTD) 24-08-1982; Zusammenfassung
Nr. 21789c

(73) Patentinhaber: METALLGESELLSCHAFT AG,
Reuterweg 14 Postfach 3724, D-6000 Frankfurt/M.1(DE)

(72) Erfinder: Fischer, Friedrich, Wilhelm-Meister-Strasse 12,
D-6380 Bad Homburg(DE)
Erfinder: Pecher, Herbert, Im Feldchen 16,
D-6000 Frankfurt am Main(DE)
Erfinder: Schaper, Willi, Langwiesenweg 16,
D-6000 Frankfurt 56(DE)

(74) Vertreter: Rieger, Harald, Dr., Reuterweg 14,
D-6000 Frankfurt am Main(DE)

## Beschreibung

Die Erfindung betrifft ein Verfahren zum biologischen Behandeln von Abwasser aus einer Rauchgasentschwefelungsanlage, wobei das Abwasser pro Liter 10 bis 100 g Salze, 0,1 bis 10 g organische Verbindungen und 100 bis 2000 ppm wasserlösliche Stickstoff-Sauerstoff-Verbindungen enthält.

In Chemical Abstracts, Band 98, Nr. 4 vom 24.01.1983 betreffen die Zusammenfassungen Nr. 21788b und 21789c die anaerobe Behandlung von Abwasser aus der Rauchgasentschwefelung. Hierbei wird einerseits ein Eisensalz zugegeben und mit rotierenden Scheiben behandelt, andererseits wird ein Schwefel-Sauerstoff-Verbindungen enthaltendes Abwasser vor der Behandlung verdünnt. In beiden Fällen arbeitet man nicht mit kohlehaltigem Trägermaterial.

Der Erfindung liegt die Aufgabe zugrunde, beim eingangs genannten Verfahren das Abwasser trotz seines hohen Salzgehalts so zu behandeln, daß biologisch abbaubare Substanzen weitgehend verschwinden. Erfindungsgemäß gelingt dies dadurch, daß man das Abwasser durch ein unter Luftabschluß gehaltenes Bett aus körnigem, überwiegend aus Kohle bestehendem Trägermaterial, das mit Faulschlammbakterien besetzt ist, leitet. Durch das Verfahren ist es ohne weiteres möglich, mindestens 90 Gew.-% der organischen Substanzen zu entfernen. Ein weiterer wichtiger Vorteil des erfindungsgemäßen Verfahrens besteht darin, daß auch die Stickstoff-Sauerstoff-Verbindungen eliminiert werden, die bisher mit dem behandelten Abwasser abgeleitet werden mußten.

Vorzugsweise handelt es sich bei dem Bett aus körnigem Trägermaterial um ein Festbett. Dies gestattet es bei ausreichend hoher Trägeroberfläche, genügend Biomasse zur Verfügung zu halten, um das Abwasser mit relativ kurzen Aufenthaltszeiten zu behandeln. Grundsätzlich ist jedoch ein Wirbelbett nicht ausgeschlossen. Als körniges Trägermaterial eignet sich insbesondere körnige Kohle, z.B. Filterkohle. Die Korngrößen des Trägermaterials liegen im Bereich von 0,5 bis 5 mm und vorzugsweise 1 bis 3 mm.

Es ist verschiedentlich beschrieben worden, daß anaerobe Stoffwechselvorgänge in stark salzhaltigen Abwässern zum Erliegen kommen bzw. weitgehend unterdrückt werden. Deshalb ist es überraschend, daß es durch das erfindungsgemäße Verfahren gelingt, Abwässer aus Rauchgasentschwefelungsanlagen zu behandeln, selbst wenn in Abwasser organische Säuren, z.B. bis zu 4 g Ameisensäure pro Liter, enthalten sind. Bei den Salzen im Abwassers handelt es sich vor allem um Calciumsalze, insbesondere $CaCl_2$ und $CaSO_4$.

Für das Verfahren sind keine speziellen Bakterien nötig, vielmehr kann Faulschlamm einer Kläranlage, z.B. einer herkömmlichen kommunalen Faulschlammanlage, ohne weiteres verwendet werden. Man füllt den Faulschlamm gemischt mit dem Trägermaterial in die Anlage. Nach einiger Betriebszeit setzt sich der Faulschlamm auf dem Trägermaterial fest.

Um die volle Wirksamkeit der Bakterien zu erreichen, ist es zunächst nötig, die Behandlung des Abwassers mit geringer Belastung zu beginnen; diese Adaptionsphase der Bakterien des Behandlungsbettes dauert üblicherweise mehrere Tage, bis die Stoffwechselvorgänge im Faulschlamm ihre optimale Intensität erreicht haben.

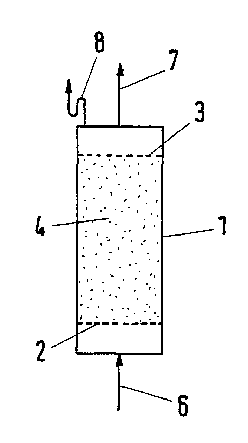

In einer Versuchsanlage wird die in der Zeichnung dargestellte Verfahrensführung gewählt. In einem zylindrischen Behälter (1) mit einer Volumen von 20 l ist zwischen zwei Rostplatten (2) und (3) ein mit Faulschlamm imprägniertes Bett (4) aus körniger Filterkohle mit Korngrößen im Bereich von 2 bis 3 mm als Festbett angeordnet. Das zu behandelnde Abwasser aus einer Rauchgasentschwefelungsanlage tritt in den luftdicht abgeschlossenen Behälter durch die Zuleitung (6) ein und verläßt den Behälter durch die Ableitung (7). Die sich entwickelnden Gase strömen durch die Leitung (8) ab, in welcher eine Wassertasse angeordnet ist, um den Zutritt von Luft in den Behälter (1) zu vermeiden.

Die Filterkohle war zuvor gemischt mit Faulschlamm aus einer kommunalen Faulschlammanlage in den Behälter (1) gebracht worden. Das Abwasser der Leitung (6), das aus einer Rauchgasentschwefelung stammt, wurde durch Flockung und Sedimentieren von Aschepartikeln befreit. Die im Rauchgas auch enthaltenen Schwermetalle brauchten aus dem Abwasser zuvor nicht entfernt zu werden, weil dies durch die Behandlung im Behälter (1) selbst geschieht. Das Abwasser in der Leitung (6) enthält pro Liter 40 g Salze, 1,5 g Ameisensäure und 700 ppm Stickstoff-Sauerstoff-Verbindungen, insbesondere Nitrite und Nitrate.

Zu Beginn der Behandlung kommen die Stoffwechselvorgänge im Behälter (1) praktisch zum Erliegen, aber nach einer Adaptionszeit von mehreren Tagen haben sich die Bakterien des Behandlungsbettes (4) im Behälter (1) merklich erholt, so daß stärkere Gasentwicklung am Austritt der Leitung (8) festzustellen ist. Nach dieser Adaptionszeit sind im behandelten Wasser der Ableitung (7) kein $NO_2^-$ und kein $NO_3^-$, sowie weniger als 50 ppm Ameisensäure nachzuweisen. Das Wasser in der Ableitung ist fast klar, was sonst bei aerob biologisch behandelten salzhaltigen oder allgemein bei anaerob behandelten Abwässern unüblich ist. In der Ableitung (7) beträgt der Gehalt an organischer Substanz nur noch ca. 10 % und der Gehalt an Ameisensäure nur noch 5 % des jeweiligen Gehalts in der Zuleitung (6). Im behandelten Abwasser gibt es keine Ausfällung freiwerdender Alkalität, wie man es aber sonst bei anaeroben Verfahren häufig antrifft und nur durch Zugabe von Salzsäure vermeiden kann. Der Gehalt des nach dem erfindungsgemäßen Verfahren behandelten Abwassers an Schwermetallionen liegt weit unter den behördlich zugelassenen Grenzwerten.

## Patentansprüche

1. Verfahren zum biologischen Behandeln von Abwasser aus einer Rauchgasentschwefelungsanlage, wobei das Abwasser pro Liter 10 bis 100 g Salze, 0,1 bis 10 g organische Verbindungen und 100 bis 2000 ppm wasserlösliche Stickstoff-Sauerstoff-Verbindungen enthält, dadurch gekennzeichnet, daß man das Abwasser durch ein unter Luftabschluß gehaltenes Bett aus körnigem, überwiegend aus Kohle bestehendem Trägermaterial, das mit Faulschlammbakterien besetzt ist, leitet.

2. Verfahren nach Anspruch 1, dadurch gekennzeichnet, daß das Bett ein Festbett ist.

3. Verfahren nach Anspruch 1 oder 2, dadurch gekennzeichnet, daß das Abwasser pro Liter 0, 1 bis 4 g Ameisensäure oder eine andere organische Säure enthält.

## Claims

1. Process for the biological treatment of waste water from a flue gas desulphurisation plant, the waste water containing, per litre, 10 to 100 g. salts, 0.1 to 10 g. organic compounds, and 100 to 2000 ppm water-soluble nitrogen-oxygen compounds, characterised in that the waste water is conducted through a bed of granular carrier material, consisting predominantly of carbon, which bed is charged with activated sludge bacteria and from which bed air is excluded.

2. Process according to Claim 1, characterised in that the bed is a fixed bed.

3. Process according to Claim 1 or 2, characterised in that the waste water contains, per litre, 0.1 to 4 g. formic acid or another organic acid.

## Revendications

1. Procédé de traitement biologique d'eau résiduaire provenant d'une installation de désulfuration de gaz de fumée, l'eau résiduaire contenant, par litre, de 10 à 100 g de sels, de 0,1 à 10 g de composés organiques et de 100 à 2000 parties par million de composés azotés et oxygénés hydrosolubles, caractérisé en ce que l'on envoie l'eau résiduaire dans un lit maintenu à l'abri de l'air et en une matière support en grains et constituée principalement de charbon, qui est peuplé de bactéries de sapropèle.

2. Procédé suivant la revendication 1, caractérisé en ce que le lit est un lit fixe.

3. Procédé suivant la revendication 1 ou 2, caractérisé en ce que l'eau résiduaire contient par litre de 0 à 4 g d'acide formique ou d'un autre acide organique.